# EUROPÄISCHE PATENTSCHRIFT

(11) **EP 1 345 407 B1**
(45) Veröffentlichungstag und Bekanntmachung des Hinweises auf die Patenterteilung: **02.07.2008**
(21) Anmeldenummer: 03002455.8
(22) Anmeldetag: 05.02.2003
(51) Int. Cl.: H04N 1/00, H04N 1/32

(54) **Vorrichtung und Verfahren zur Steuerung des Zugriffs auf mehrere elektronische Datenträger**
Access control for data carriers
Contrôle d'accès de suppports de données

(30) Priorität: 20.02.2002 DE 10208179
(43) Veröffentlichungstag der Anmeldung: 17.09.2003
(73) Patentinhaber: CeWe Color AG & Co. OHG, 26133 Oldenburg (DE)
(72) Erfinder: Schütz, Peter, 26316 Varel (DE)
(74) Vertreter: Eisenführ, Speiser & Partner

(56) Entgegenhaltungen:
- EP-A- 1 137 247
- WO-A-02/21209
- WO-A-99/63524

## Beschreibung

Die Erfindung betrifft eine Vorrichtung zur Steuerung des Zugriffs auf mehrere elektronische Datenträger, denen jeweils ein Aufbewahrungsmittel zugeordnet ist. Die Erfindung betrifft ferner eine Vorrichtung zur Erstellung von Bildprodukten anhand von auf einem der elektronischen Datenträger gespeicherten Bilddaten, ein entsprechendes Verfahren zur Steuerung des Zugriffs auf mehrere elektronische Datenträger sowie ein Computerprogramm zur Ausführung des Verfahrens.

Eine Vorrichtung zur Archivierung und Übertragung von Bilddaten eines Kunden zu einem Entwicklungslabor ist aus der internationalen Patentanmeldung PCT/EP01/08144 bekannt. Dabei kann ein Kunde auf einem elektronischen Datenträger, wie beispielsweise einer Smart-Media-Card oder einer Flash-Card, gespeicherte digitale Bilddaten in diese Vorrichtung eingeben und ein von dem Entwicklungslabor zu erstellendes Bildprodukt auswählen. Sämtliche Bilddaten werden dann zusammen mit den Auftragsdaten auf einen gesonderten elektronischen Datenträger gespeichert, wie beispielsweise eine beschreibbare CD. Diese wird dann an das Entwicklungslabor übermittelt, das die bestellten Bildprodukte erstellt und zusammen mit dem gesonderten Datenträger zurück an den Kunden liefert.

Bei dem Entwicklungslabor kommen somit zahlreiche elektronische Datenträger, also beispielsweise CDs, mit Kundendaten an, für die das Entwicklungslabor Bildprodukte, z.B. Fotoabzüge, erstellen soll. Zum Transport des gesonderten elektronischen Datenträgers von der Auftragsannahme zum Entwicklungslabor und von dort zurück an den Kunden bzw. an den Fotohändler ist der Datenträger in einem Aufbewahrungsmittel aufbewahrt, beispielsweise in einer Fototasche, auf der der Kunde auch gesondert Auftragsinformationen und Adressdaten angeben kann. Da derartige Aufträge anders als die konventionelle Erstellung von Fotopapierabzügen von Filmnegativen von Hand bearbeitet werden, muss sichergestellt sein, dassDatenträger und Aufbewahrungsmittel innerhalb des Entwicklungslabors nicht mit anderen Datenträgern und Aufbewahrungsmitteln vermischt werden, so dass beispielsweise ein Datenträger in ein falsches Aufbewahrungsmittel gelangt und somit zu einem falschen Kunden zurückgeliefert werden würde. Die Vermeidung derartiger Verwechslungen ist insbesondere deshalb erforderlich, da weder das Aufbewahrungsmittel noch der Datenträger eine Kennung tragen, die die Zugehörigkeit zueinander anzeigen. Wenn also einmal eine Verwechslung stattgefunden hat, also ein Datenträger von dem zugehörigen Aufbewahrungsmittel getrennt worden ist, ist weder anhand des Datenträgers noch des Aufbewahrungsmittels zu erkennen, dass sie einander zugeordnet sind.

Die Bearbeitung eines solchen Auftrags erfordert eine unterschiedliche Zeitdauer je nachdem, wie viele Bilddaten auf dem Datenträger gespeichert sind. Es kann also vorkommen, dass für längere Zeit, beispielsweise einige Minuten, ein Datenträger nur ausgelesen wird, wobei die den Auftrag bearbeitende Person dann keine weiteren Tätigkeiten an derselben Vorrichtung vornehmen kann, also beispielsweise weitere Aufträge bearbeiten kann. Dies führt zu enormen Zeitverlusten bei der Bearbeitung, solcher Aufträge.

EP 1 137 247 A2 beschreibt ein Fotoverarbeitungssystem, bei dem Bilddaten aus verschiedenen Quellen zur Erstellung digitaler Bildprodukte in einem Fotoentwicklungslabor erstellt werden können. Zur Vereinfachung der Bearbeitung der einzelnen Aufträge werden die erhaltenen Bilddaten zunächst in ein einheitliches digitales Format gebracht, bevor die digitalen Bildprodukte daraus erstellt werden.

In der WO 99/63524 A2 ist ein System zum Managen von Datenträgern bekannt. Um einen gesuchten Datenträger zu finden, ist an der Hülle des Datenträgers ein Chip angebracht, der eine Identifikation des Datenträgers speichert. Wenn eine entsprechende Suchanfrage, beispielsweise, eines CD-Players, gesendet wird und dies von dem entsprechenden Chip beantwortet wird, kann eine entsprechende Anzeige, z.B. eine an der CD-Hülle angebrachte LED oder an einem Fach einer Ablage angebrachte LED, den Fundort anzeigen.

Der vorliegenden Erfindung liegt deshalb die Aufgabe zugrunde, eine Vorrichtung und ein Verfahren zur Steuerung des Zugriffs auf mehrere elektronische Datenträger zu schaffen, denen jeweils ein Aufbewahrungsmittel zugeordnet ist, das die gleichzeitige Bearbeitung solcher Aufträge ermöglicht, wobei gleichzeitig sichergestellt ist, dass Verwechslungen von Aufbewahrungsmitteln und Datenträgern mit hoher Wahrscheinlichkeit verhindert oder gar vollständig vermieden werden.

Diese Aufgabe wird erfindungsgemäß mit einer Vorrichtung nach. Anspruch 1 gelöst, die ausgestattet ist mit:
- mehreren Zugriffseinheiten für den gleichzeitigen Zugriff auf mehrere elektronische Datenträger,
- mehreren Ablagen für die Ablage der Aufbewahrungsmittel der elektronischen Datenträger, wobei vorzugsweise jeder Zugriffseinheit genau eine Ablage zugeordnet ist,
- jeweils einer Ablage-Statusanzeige pro Ablage zur Anzeige des Ablagestatus.
- jeweils einer Zugriffseinheit-Statusanzeige pro Zugriffseinheit zur Anzeige des Status der Zugriffseinheit.
- einer Steuereinheit zur Steuerung des Zugriffs auf die Datenträger und der Statusanzeigen derart, dass bei Einbringen eines Datenträgers in eine Zugriffseinheit oder eines Aufbewahrungsmittels in eine Ablage mittels der Statusanzeigen eine Anzeige erfolgt, in welche Ablage bzw. Zugriffseinheit das dem eingebrachten Datenträger zugeordnete Aufbewahrungsmittel bzw. der dem eingebrachten Aufbewahrungsmittel zugeordnete Datenträger einzubringen ist,-und dass nur bei Einbringung in die angezeigte Ablage bzw. Zugriffseinheit ein Zugriff auf den eingebrachten Datenträger erfolgt, wobei während des Zugriffs weitere Ablagen und Zugriffseinheiten beladen und entladen werden können.

Alternativ wird diese Aufgabe auch gelöst durch eine Vorrichtung nach Anspruch 2, die ausgestaltet ist mit:
- mehreren Zugriffseinheiten für den gleichzeitigen Zugriff auf mehrere elektronische Datenträger,
- mehreren Ablagen für die Ablage der Aufbewahrungsmittel der elektronischen Datenträger, wobei vorzugsweise jeder Zugriffseinheit genau eine Ablage zugeordnet ist,
- jeweils einer Ablage-Statusanzeige pro Ablage zur Anzeige des Ablagestatus,
- jeweils einer Zugriffseinheit-Statusanzeige pro Zugriffseinheit zur Anzeige des Status der Zugriffseinheit,
- einer Steuereinheit zur Steuerung des Zugriffs auf die Datenträger und der Statusanzeigen derart, dass bei Entnahme eines Datenträgers aus einer Zugriffseinheit oder eines Aufbewahrungsmittels aus einer Ablage mittels der Statusanzeigen eine Anzeige erfolgt, aus welcher Ablage bzw. Zugriffseinheit das dem entnommenen Datenträger zugeordnete Aufbewahrungsmittel bzw. der dem eingebrachten Aufbewahrungsmittel zugeordnete Datenträger zu entnehmen ist, und dass nur bei Entnahme aus der angezeigten Ablage bzw. Zugriffseinheit weitere Ablagen und Zugriffseinheiten beladen und entladen werden können.

Der Erfindung liegt dabei die Erkenntnis zugrunde, eine Zuordnung zwischen den Zugriffseinheiten und den Ablagen zu schaffen und dem Benutzer mittels der Statusanzeigen jeweils anzuzeigen, welche Ablage bzw. Zugriffseinheit jeweils zu beladen bzw. zu entladen ist. Durch die Steuereinheit wird somit eine eindeutige Zuordnung jeweils zwischen einer Zugriffseinheit und einer Ablage geschaffen, wodurch gleichzeitig eine feste Zuordnung zwischen dem in die Zugriffseinheit eingebrachten Datenträger und dem in die Ablage eingebrachten Aufbewahrungsmittel geschaffen wird. Bei der erfindungsgemäßen Vorrichtung ist es somit möglich, dass gleichzeitig auf mehrere elektronische Datenträger, die in unterschiedliche Zugriffseinheiten eingebracht sind, gleichzeitig zugegriffen wird. Beim Beladen und Entladen der Zugriffseinheiten bzw. der Ablagen kann aber immer nur eine Zugriffseinheit und eine Ablage beladen bzw. entladen werden, und erst nach Beladen bzw. Entladen der Zugriffseinheit und der jeweils zugeordneten Ablage kann ein weiterer Belade- oder Entladevorgang erfolgen. Dadurch werden wirksam Verwechslungen zwischen mehreren Datenträgern bzw. Aufbewahrungsmitteln verhindert. Gleichzeitig wird jedoch eine schnellere Verarbeitung ermöglicht, da während des Belade- und Entladevorgangs auch bereits in eine Zugriffseinheit eingebrachte Datenträger bearbeitet werden können. Der Benutzer muss also nicht warten, bis ein Datenträger bzw. ein Auftrag vollständig abgearbeitet ist, um danach den nächsten Datenträger zur Bearbeitung einfügen zu können, sondern kann die Bearbeitungszeit eines Datenträgers nutzen, um weitere Zugriffseinheiten und Ablagen zu beladen bzw. zu entladen.

Vorteilhafte Ausgestaltungen der erfindungsgemäßen Vorrichtung ergeben sich aus den Unteransprüchen. Die erfindungsgemäße Vorrichtung kann insbesondere bei einer Vorrichtung zur Erstellung von Bildprodukten anhand von auf einem elektronischen Datenträger gespeicherten Bilddaten eingesetzt werden, wie sie im Anspruch 10 angegeben ist und die ferner Mittel zum Lesen von Auftragsdaten von auf demselben Datenträger oder zum Eingeben von Auftragsdaten sowie eine Vorrichtung zur Verarbeitung der auf dem Datenträger gespeicherten digitalen Bilddaten anhand der Auftragsdaten und zur Erstellung der Bildprodukte aufweist. Die Aufgabe wird auch gelöst durch ein Verfahren nach Anspruch 11 oder 12. Darüber hinaus betrifft die Erfindung ein Computerprogramm mit Computerprogrammmitteln zur Veranlassung eines Computers zur Ausführung der Verfahrensschritte des Verfahrens nach Anspruch 11 oder 12, wenn das Computerprogramm auf einem Computer läuft.

In einer bevorzugten Ausgestaltung ist vorgesehen, dass die Zugriffs-Statusanzeigen und/oder die Ablage-Statusanzeigen jeweils ein optisches Anzeigemittel, insbesondere eine Leuchtdiode, aufweisen. Dadurch kann dem Benutzer optisch angezeigt werden, welche Ablage bzw. Zugriffseinheit entladen bzw. beladen werden soll. Alternativ können jedoch auch mechanische Anzeigemittel vorgesehen sein, wie beispielsweise ein mechanischer Verschluss der entsprechenden Zugriffseinheit oder Ablage, oder eine mechanische Entlade-/Beladevorrichtung. Dies kann beispielsweise eine Klappe sein, die die Zugriffseinheit bzw. Ablage mechanisch verschließt und öffnet oder eine automatisch sich öffnende bzw. sich schließende Vorrichtung, wie beispielsweise ein CD-Einschub in einem CD-ROM-Laufwerk.

Zur Detektion des Beladungszustandes der Ablagen bzw. Zugriffseinheiten sind in einer weiteren bevorzugten Ausgestaltung Sensormittel, insbesondere optische Sensormittel, in den Ablagen und/oder Zugriffseinheiten vorgesehen. Dadurch weiß die Steuereinheit automatisch, welche Ablagen und/oder Zugriffseinheiten noch zum Beladen zur Verfügung stehen bzw. aus welcher Ablage und/oder Zugriffseinheit der Benutzer ein Aufbewahrungsmittel bzw. einen Datenträger entnommen hat und kann somit auch Fehlbedienungen unmittelbar anzeigen, also wenn der Benutzer beispielsweise aus einer falschen Ablage ein Aufbewahrungsmittel entnommen hat.

Vorzugsweise werden die erfindungsgemäße Vorrichtung und das erfindungsgemäße Verfahren in einem Fotoentwicklungslabor eingesetzt, um digitale Bilddatenträger wie insbesondere CDs auszulesen und Fotobildprodukte gemäß einem entsprechenden Auftrag zu erstellen. Die Bilddatenträger gelangen dabei meist in einer Fototasche zu dem Entwicklungslabor. Die Ablagen sind deshalb bevorzugt zur Aufnahme von Fototaschen ausgebildet, beispielsweise in Form von Einlegefächern, und die Zugriffseinheiten sind deshalb bevorzugt zum Zugriff auf digitale Bilddaten speichernde Datenträger ausgebildet.

Da grundsätzlich auch möglich ist, dass unterschiedliche elektronische Datenträger, insbesondere optische, magnetische, magnetooptische und/oder auf Halbleiterspeichern basierende Datenträger verarbeitet werden sollen, sind die Zugriffseinheiten entsprechend mit mehreren Zugriffsuntereinheiten ausgestaltet, d.h., jede Zugriffsuntereinheit ist für den Zugriff auf einen andersartigen Datenträger ausgestaltet. Bevorzugt ist jedoch vorgesehen, dass jede Zugriffseinheit eine gleiche Anzahl und gleichartige Zugriffsuntereinheiten aufweist.

Weiter ist in einer bevorzugten Ausgestaltung vorgesehen, dass die Zugriffseinheit-Statusanzeigen ausgebildet sind zur Anzeige eines Datenträger- oder Zugriffsfehlers. So kann der Benutzer unmittelbar sehen, ob und auf welchem Datenträger ein Fehler vorliegt, um diesen Datenträger dann gesondert bearbeiten oder entnehmen zu können.

Um auf den Aufbewahrungsmitteln aufgebrachte Daten, beispielsweise einen Barcode, elektronisch lesen zu können, ist vorzugsweise eine entsprechende Leseeinheit vorgesehen. Die gelesenen Daten können dann auch den von dem zugeordneten Datenträger gelesenen Daten zugeordnet werden, wozu geeignete Mittel vorgesehen sind. So können beispielsweise Auftragsdaten, die auf einer Fototasche aufgebracht sind, den von dem Datenträger gelesenen Bilddaten zugeordnet werden, und die Kombination aus Auftragsdaten und Bilddaten kann dann an eine diese Daten weiterverarbeitende Vorrichtung, beispielsweise eine Fotoentwicklungsstation, weitergeliefert werden. Alternativ können die Auftragsdaten aber auch per Hand in die Vorrichtung eingegeben und mit den Bilddaten verknüpft werden.

Die Erfindung wird nachfolgend anhand der Zeichnungen näher erläutert.

Es zeigen:
- Figur 1: eine Skizze zur Erläuterung der Verarbeitung von Bilddaten,
- Figur 2: ein Blockschaltbild einer erfindungsgemäßen Vorrichtung,
- Figur 3: ein Ablaufdiagramm einer ersten Ausgestaltung des erfindungsgemäßen Verfahrens,
- Figur 4: ein Ablaufdiagramm einer zweiten Ausgestaltung des erfindungsgemäßen Verfahrens und
- Figur 5: ein Ablaufdiagramm einer dritten Ausgestaltung eines erfindungsgemäßen Verfahrens.

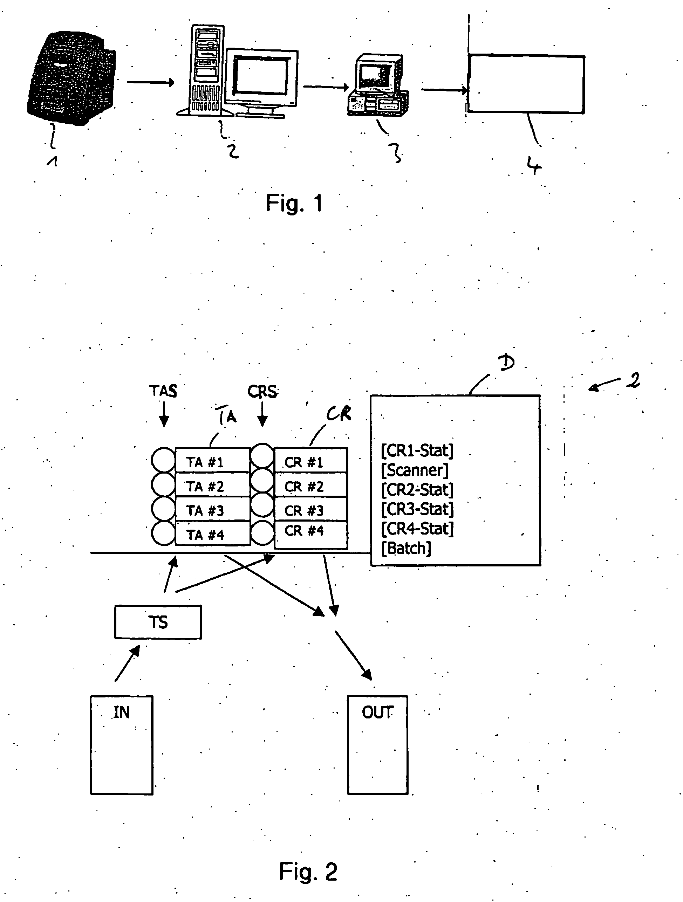

Figur 1 zeigt in einer einfachen Skizze eine aus mehreren Einzelgruppen bestehende Vorrichtung zur Erstellung von Bildprodukten anhand von auf einem elektronischen Datenträger gespeicherten Bilddaten. An einer Eingabevorrichtung 1 kann ein Kunde seinen eigenen Datenträger, z.B. eine Flash-Card oder eine Smart-Media-Card, auf der elektronische Bilddaten gespeichert sind, eingeben und die darauf gespeicherten Bilddaten auf einen anderen Datenträger, z.B. eine CD, übertragen. Zusätzlich kann er, je nach Ausgestaltung der Eingabevorrichtung 1, gesondert auswählen, von welchen Bildern welche Bildprodukte in welcher Anzahl erstellt werden sollen. Dazu kann unterstützend jede auf dem Datenträger gespeicherte Bilddatei in ein Bild umgewandelt und angezeigt werden. An der Vorrichtung 1 werden somit vorzugsweise auch Auftragsdaten erzeugt, die ebenfalls auf den elektronischen Datenträger geschrieben werden, auf den die Bilddaten des Kunden übertragen wurden. Derartige Eingabevorrichtungen 1 sind bevorzugt bei Fotohändlern aufgestellt, können jedoch auch an anderen Orten, beispielsweise in Kaufhäusern oder Bahnhöfen, aufgestellt sein. Nach der Übertragung der Bilddaten und der Erstellung der Auftragsdaten wird der elektronische Datenträger in ein Aufbewahrungsmittel, z.B. eine Fototasche, eingepackt, um den Datenträger an ein Fotoentwicklungslabor zur Bearbeitung des Auftrages zu übersenden. In der Zwischenzeit kann der Kunde seinen mitgebrachten Datenträger, also beispielsweise die Flash-Card oder die Smart-Media-Card, zum weiteren Gebrauch wieder mitnehmen.

In dem Entwicklungslabor werden die Aufträge von Hand an einer Auftragsbearbeitungsvorrichtung 2 bearbeitet. Diese ist dazu ausgestaltet, von einem eingehenden Datenträger die Bilddaten auszulesen und mit Auftrags- sowie Kundendaten zu verknüpfen. Die Auftragsdaten werden dazu entweder elektronisch ebenfalls von dem Datenträger, beispielsweise der Bild-CD, gelesen oder von dem Bedienpersonal von der Fototasche gelesen und in die Vorrichtung 2 eingegeben. Der Datenträger wird also an dieser Vorrichtung 2 von der Fototasche getrennt und in eine Leseeinheit der Vorrichtung 2 eingelegt. Um unnötige Wartezeiten während des Auslesens des Datenträgers zu vermeiden, ist die Vorrichtung 2 zum gleichzeitigen Lesen mehrerer Datenträger ausgestaltet. Da jedoch weder die Datenträger noch die Fototaschen eine Kennung aufweisen, die die Zugehörigkeit von Fototasche zu Datenträger kennzeichnen, ist die Vorrichtung 2 erfindungsgemäß besonders ausgestaltet, um Verwechslungen weitestgehend zu vermeiden, wie nachfolgend erläutert werden soll.

Die von der Vorrichtung 2 verknüpften Bilddaten und Auftragsdaten werden einer nachgeschalteten Auftragsmanagementvorrichtung 3 zur Verfügung gestellt. Diese erzeugt einen Fotoindex und übergibt die Bilddaten und Auftragsdaten zur Erstellung der Bildprodukte einer Druckvorrichtung 4. Nach Erstellung der Bildprodukte werden diese zusammen mit der Bild-CD und dem Fotoindex in der Fototasche an den Kunden bzw. den Fotohändler des Kunden gesandt.

In Figur 2 ist die erfindungsgemäße Auftragsbearbeitungsvorrichtung 2 als Blockschaltbild näher dargestellt. In einem Eingangskorb IN sind eingehende Fototaschen mit elektronischen Datenträgern (z.B. CDs) zur Bearbeitung bereitgestellt, wobei die Fototaschen vorzugsweise nach Art des Auftrags, z.B. nach dem Format der zu erstellenden Fotopapierabzüge, sortiert sind. Mittels eines Taschenscanners TS können Daten elektronisch von der Fototasche, z.B. ein Barcode, gelesen werden. Zur Ablage von Fototaschen, denen die Datenträger entnommen wurden, ist eine Taschenablage TA mit mehreren, vorliegend vier, Taschenablagefächern vorgesehen, denen jeweils eine Ablage-Statusanzeige TAS in Form einer Leuchtdiode zugeordnet ist. Zum Einlegen der entnommenen elektronischen Datenträger sind mehrere, vorliegend vier Zugriffseinheiten CR vorgesehen, denen jeweils eine Zugriffseinheit-Statusanzeige CRS, vorzugsweise in Form einer Leuchtdiode, zugeordnet ist. Zur Anzeige verschiedener Daten, beispielsweise des Bearbeitungsstatus der einzelnen Zugriffseinheiten CR, ist eine Anzeige D vorgesehen. Nachdem alle Daten von einem Datenträger ausgelesen wurden und mit den entsprechenden Auftragsdaten verknüpft wurden, wird der elektronische Datenträger wieder aus der entsprechenden Zugriffseinheit entnommen, in die richtige Fototasche eingelegt und schließlich in dem Ausgangskorb OUT für bearbeitete Aufträge abgelegt.

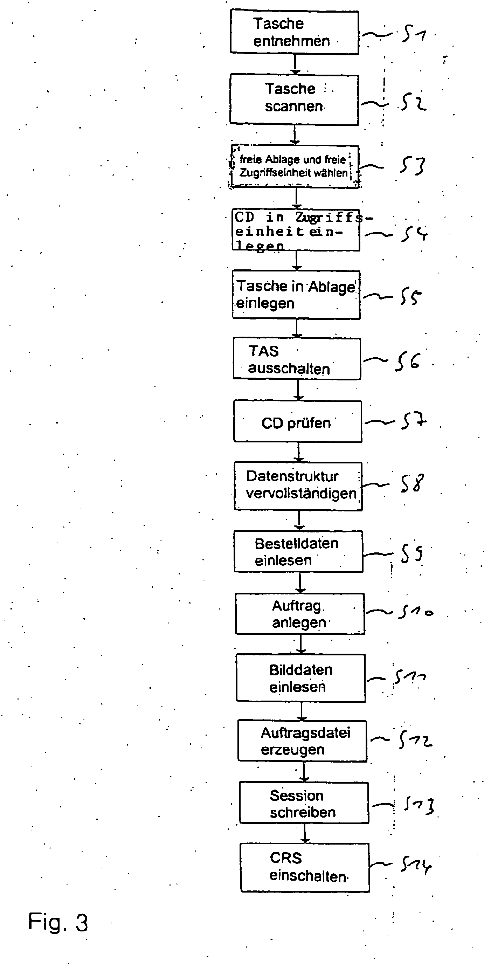

Der Ablauf der Verarbeitung eines Auftrags soll nachfolgend anhand der Figur 3 näher erläutert werden. Grundsätzlich sind von dem Bearbeiter folgende Tätigkeiten durchzuführen:
a) Die Ablage-Statusanzeigen TAS kontrollieren: wenn eine Anzeige ein Signal anzeigt, beispielsweise eine Lampe leuchtet, kann eine Fototasche aus dem Eingangskorb IN entnommen und verarbeitet werden.
b) Die Zugriffseinheit-Statusanzeigen CRS kontrollieren: wenn ein Signal angezeigt wird, soll ein bearbeiteter Datenträger entnommen, in die zugehörige Fototasche eingefügt und im Ausgangskorb OUT abgelegt werden.
c) Die Zugriffseinheit-Statusanzeigen CRS kontrollieren: wenn ein Fehlersignal ausgegeben wird, z.B. eine Lampe blinkt, soll ein fehlerhafter Auftrag entnommen und für eine gesonderte Bearbeitung beiseite gelegt werden.

Die Bearbeitung eines Auftrags erfolgt im Detail wie folgt. Vorausgesetzt, eine Taschenablage TA ist frei, kann eine Fototasche aus dem Eingangskorb IN entnommen werden (Schritt S1). Die Tasche wird nachfolgend mittels des Taschenscanners TS gescannt (S2), um beispielsweise eine Auftragsnummer einzulesen. Gegebenenfalls können auch manuell weitere Auftragsdaten in die Vorrichtung eingegeben werden. In Schritt S3 wählt die Auftragsbearbeitungsvorrichtung 2 eine freie Ablage und eine zugehörige freie Zugriffseinheit #Z. Die entsprechende Ablage-Statusanzeige TAS#Z wird eingeschaltet, alle anderen Ablage-Statusanzeigen TAS werden ausgestaltet und die zugehörige Zugriffseinheit CR#Z wird geöffnet. Der Bediener legt als nächstes (S4) den elektronischen Datenträger in die geöffnete Zugriffseinheit CR#Z ein, wobei jetzt zusätzliche Auftragsdaten eingegeben werden können. Der Benutzer legt außerdem (S5) die entsprechende Fototasche, aus der der Datenträger entnommen wurde, in die mit TAS#Z angezeigte Ablage TA#Z ein. Durch entsprechende Sensoren, beispielsweise einen optischen Sensor oder einen mechanischen Kontaktsensor, kann das Einbringen der Fototasche in die Ablage automatisch erkannt werden und das Schließen der Zugriffseinheit CR#Z veranlassen. Danach (S6) wird auch die Ablage-Statusanzeige TAS#Z ausgeschaltet.

Von der Vorrichtung wird nun der elektronische Datenträger überprüft (S7). Falls ein Datenträgerfehler auftritt, kann dies mittels der Zugriffseinheit-Statusanzeige CRS#Z angezeigt werden. Ergänzend kann auch auf dem Display eine entsprechende Meldung erscheinen. Falls aus Sicherheitsgründen noch nicht vorhanden, kann die Datenstruktur des elektronischen Datenträgers vervollständigt werden (S8). Beispielsweise kann bei einer CD der Lead-Out-Bereich sowie das Inhaltsverzeichnis (Table Of Contents TOC) geschrieben werden. Nunmehr (S9) können die Bestelldaten eingelesen werden, wonach (S10) ein neuer Auftrag elektronisch angelegt wird. Die zur Erledigung dieses Auftrags erforderlichen Bilddaten werden sodann (S11) von dem Datenträger gelesen und in der Vorrichtung, z.B. in einem Speicher oder in einem angeschlossenen Netzwerk, abgelegt. Schließlich (S12) wird eine Auftragsdatei erzeugt und gespeichert, der neue Bearbeitungsvorgang (Session) wird geschrieben und abgeschlossen (S13). Zum Anzeigen des abgeschlossenen Auftrags wird die Zugriffseinheit-Statusanzeige CRS#Z des bearbeiteten Datenträgers wieder eingeschaltet (S14).

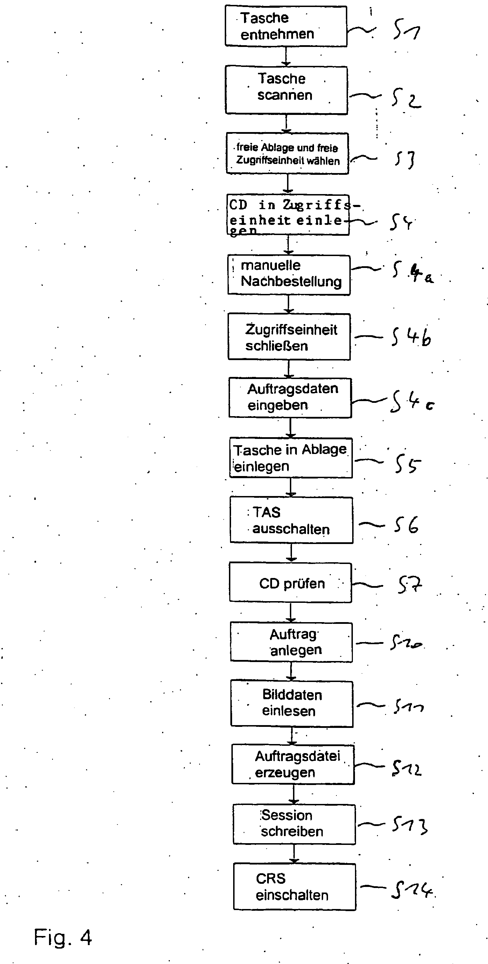

Das geschilderte Verfahren wird in dieser Form insbesondere dann durch-laufen, wenn Auftragsdaten elektronisch auf dem Datenträger vorhanden sind. Es kann jedoch auch der Fall sein, dass solche Auftragsdaten nur auf der Fototasche verzeichnet sind. Dann sind geringfügige Modifikationen des Verfahrens vorzunehmen, wie dies in Figur 4 gezeigt ist. Die Schritte S1 bis S4 sind dabei identisch zu den in Figur 3 gezeigten Schritten S1 bis S4. In Schritt S4a betätigt der Benutzer dann die Taste "manuelle Nachbestellung", woraufhin die Zugriffseinheit CR#Z geschlossen wird (S4b). Daraufhin gibt der Benutzer die entsprechenden Auftragsdaten ein (S4c). Die weiteren Schritte S5 bis S7 sowie S10 bis S14 entsprechen dann wieder den in Figur 3 gezeigten entsprechenden Schritten S5 bis S7 sowie S10 bis S14.

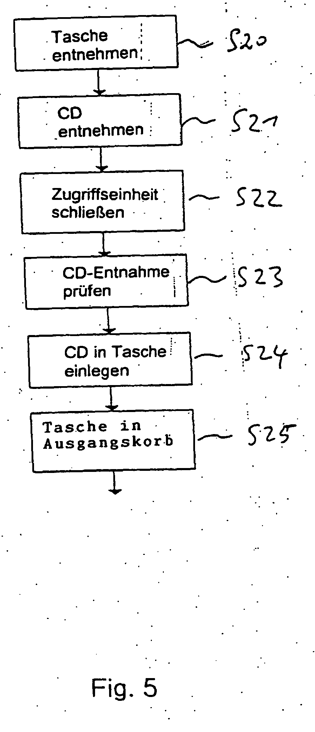

Die Verfahrensschritte zur Entnahme einer Fototasche und des zugehörigen elektronischen Datenträgers sind in Figur 5 näher gezeigt. Voraussetzung ist zunächst, dass die Bearbeitung eines Datenträgers fertiggestellt ist, dass also eine Zugriffseinheit-Statusanzeige CRS ein Entnahmesignal anzeigt. Dann wird zunächst in Schritt S20 eine Fototasche aus einer Ablage entnommen, für die beispielsweise ebenfalls angezeigt wird, dass die Bearbeitung des zugehörigen Datenträgers fertiggestellt ist. Da aufgrund von entsprechend vorgesehenen Kontakten automatisch erkannt wird, dass die Tasche aus der Ablage TA#Z entnommen wurde, wird automatisch auch die zugehörige Zugriffseinheit CR#Z geöffnet. Der Bediener entnimmt aus dieser Zugriffseinheit CR#Z den entsprechenden Datenträger (S21). Vorzugsweise ist vorgesehen, dass die Zugriffseinheit CR#Z nur für eine kurze Zeitdauer, beispielsweise drei Sekunden, geöffnet ist, und danach geschlossen wird (S22). Danach (S23) wird geprüft, ob der Datenträger tatsächlich entnommen wurde. Falls dies nicht der Fall ist, wird die Zugriffseinheit CR#Z erneut geöffnet. Der Bediener legt schließlich den entnommenen Datenträger in die entnommene Fototasche (S24) und legt die Tasche in den Ausgangskorb OUT der bearbeiteten Aufträge.

Die erfindungsgemäße Vorrichtung zur Steuerung des Zugriffs auf mehrere elektronische Datenträger hat somit primär folgende Aufgaben:
- Lesen der Kunden- und Auftragsnummer der Fototasche sowie eine Verknüpfung mit dem eingesendeten Datenträger. Dabei kann vorgesehen sein, dass jede Zugriffseinheit mehrere Zugriffsuntereinheiten für unterschiedliche Arten von Datenträgern, wie beispielsweise ZIP, Diskette, Smart-Media-Karten, Kompakt-Flash-Karten, Multimedia- und SD-Karten, IBM-Microdrives, Memory Sticks, CDs, DVDs u.a. aufweisen. Vorzugsweise weist jede Zugriffseinheit die gleiche Anzahl derselben Zugriffsuntereinheiten auf.
- Einlesen von elektronischen Datenträgern, insbesondere Einlesen der Bestelldaten, der Bilddaten und gegebenenfalls weiterer Terminaldaten (Betriebsjournal, Statistiken, etc.).
- Manuelle Eingabe von Nachbestelldaten (URS)
- Manuelle Eingabe von zusätzlichen Bestellinformationen (wie z.B. Anzahl der Abzüge je Bild etc.).

Weitere Aufgaben betreffen das Erfassen von Artikelkodes, Extrakodes, Abteilung, Bediener, die Erzeugung von Fakturierungsdaten und die Bildung eines Batches für die Ausbelichtung.

Durch die erfindungsgemäße Steuerung des Zugriffs auf die Datenträger bzw. die Steuerung der Statusanzeigen für die Ablagen und Zugriffseinheiten wird sichergestellt, dass Verwechslungen von Datenträgern und Auftragstaschen praktisch mit hoher Wahrscheinlichkeit vermieden werden können. Zu jeder Zeit ist eine eindeutige Zuordnung von Datenträger und Auftragstasche dadurch gewährleistet, dass jeweils nur maximal eine Zugriffseinheit zum Zugriff geöffnet ist, beispielsweise dass maximal nur ein CD-Schubfach geöffnet, und dass eine Weiterverarbeitung erst nach Einlegen einer Auftragstasche in das entsprechend der Zugriffseinheit zugeordnete Ablagefach erfolgt ist und dieses Einlegen erkannt wurde. Vorzugsweise wird also sowohl beim Beladevorgang als auch beim Entladevorgang geprüft, ob der Bediener während eines Vorgangs das zusammengehörige Paar von Auftragstasche und Datenträger belädt bzw. entlädt, und dass bei einer Fehlbedienung ein weiteres Beladen bzw. Entladen der Vorrichtung gesperrt wird. Ansonsten kann bei der erfindungsgemäßen Vorrichtung gleichzeitig auf mehrere Datenträger zugegriffen werden, wobei während des Zugriffs auch eine Beladung bzw. Entladung mit weiteren Auftragstaschen und Datenträgern erfolgen kann. Die ansonsten erforderliche Wartezeit beim Zugriff auf einen Datenträger kann somit sinnvoll genutzt werden, was einen deutlich höheren Durchsatz an Aufträgen an einer solchen Vorrichtung zur Folge hat.

Die Erfindung ist nicht auf die in den Figuren beschriebene Verwendung bei der Bearbeitung von elektronischen Datenträgern mit Bilddaten, die in Fotoauftragstaschen geliefert werden, beschränkt, sondern kann grundsätzlich überall da verwendet werden, wo gleichzeitig auf mehrere Datenträger zugegriffen werden soll, denen jeweils ein Aufbewahrungsmittel zugeordnet ist, und Verwechslungen beim Beladen bzw. Entladen der Lesevorrichtung wirksam vermieden werden sollen.

## Patentansprüche

1. Vorrichtung zur Steuerung des Zugriffs auf mehrere elektronische Datenträger, denen jeweils ein Aufbewahrungsmittel zugeordnet ist, mit:
- mehreren Zugriffseinheiten (CR) für den gleichzeitigen Zugriff auf mehrere elektronische Datenträger,
- mehreren Ablagen (TA) für die Ablage der Aufbewahrungsmittel der elektronischen Datenträger, wobei vorzugsweise jeder Zugriffseinheit genau eine Ablage zugeordnet ist,
- jeweils einer Ablage-Statusanzeige (TAS) pro Ablage zur Anzeige des Ablagestatus.
- jeweils einer Zugriffseinheit-Statusanzeige (CRS) pro Zugriffseinheit zur Anzeige des Status der Zugriffseinheit,
- einer Steuereinheit zur Steuerung des Zugriffs auf die Datenträger und der Statusanzeigen derart, dass bei Einbringen eines Datenträgers in eine Zugriffseinheit oder eines Aufbewahrungsmittels in eine Ablage mittels der Statusanzeigen eine Anzeige erfolgt, in welche Ablage bzw. Zugriffseinheit das dem eingebrachten Datenträger zugeordnete Aufbewahrungsmittel bzw. der dem eingebrachten Aufbewahrungsmittel zugeordnete Datenträger einzubringen ist, und dass nur bei Einbringung in die angezeigte Ablage bzw. Zugriffseinheit ein Zugriff auf den eingebrachten Datenträger erfolgt, wobei während des Zugriffs weitere Ablagen und Zugriffseinheiten beladen und entladen werden können.

2. Vorrichtung zur Steuerung des Zugriffs auf mehrere elektronische Datenträger, denen jeweils ein Aufbewahrungsmittel zugeordnet ist, mit:
- mehreren Zugriffseinheiten (CR) für den gleichzeitigen Zugriff auf mehrere elektronische Datenträger,
- mehreren Ablagen (TA) für die Ablage der Aufbewahrungsmittel der elektronischen Datenträger, wobei vorzugsweise jeder Zugriffseinheit genau eine Ablage zugeordnet ist,
- jeweils einer Ablage-Statusanzeige (TAS) pro Ablage zur Anzeige des Ablagestatus,
- jeweils einer Zugriffseinheit-Statusanzeige (CRS) pro Zugriffseinheit zur Anzeige des Status der Zugriffseinheit,
- einer Steuereinheit zur Steuerung des Zugriffs auf die Datenträger und der Statusanzeigen derart, dass bei Entnahme eines Datenträgers aus einer Zugriffseinheit oder eines Aufbewahrungsmittels aus einer Ablage mittels der Statusanzeigen eine Anzeige erfolgt, aus welcher Ablage bzw. Zugriffseinheit das dem entnommenen Datenträger zugeordnete Aufbewahrungsmittel bzw. der dem entnommenen Aufbewahrungsmittel zugeordnete Datenträger zu entnehmen ist, und dass nur bei Entnahme aus der angezeigten Ablage bzw. Zugriffseinheit weitere Ablagen und Zugriffseinheiten beladen und entladen werden können.

3. Vorrichtung nach Anspruch 1 oder 2,
**dadurch gekennzeichnet, dass** die Zugriffseinheit-Statusanzeigen (CRS) und/oder die Ablage-Statusanzeigen (TAS) jeweils ein optisches Anzeigemittel, insbesondere eine Leuchtdiode, aufweisen.

4. Vorrichtung nach Anspruch 1 oder 2,
**dadurch gekennzeichnet, dass** die Zugriffseinheit-Statusanzeigen (CRS) und/oder die Ablage-Statusanzeigen (TAS) jeweils ein mechanisches Anzeigemittel, insbesondere einen Verschluss und/oder eine Entlade-/Beladevorrichtung, aufweisen.

5. Vorrichtung nach einem der vorherigen Ansprüche,
**dadurch gekennzeichnet, dass** die Ablagen (TA) und/oder die Zugriffseinheiten (CR) Sensormittel, insbesondere optische Sensormittel, aufweisen zur Detektion des Beladungszustandes der Ablagen bzw. Zugriffseinheiten.

6. Vorrichtung nach einem der vorherigen Ansprüche,
**dadurch gekennzeichnet, dass** die Ablagen (TA) zur Aufnahme von Fototaschen ausgebildet sind und dass die Zugriffseinheiten (CR) zum Zugriff auf digitale Bilddaten speichernde Datenträger ausgebildet sind.

7. Vorrichtung nach einem der vorherigen Ansprüche,
**dadurch gekennzeichnet, dass** die Zugriffseinheiten (CR) jeweils mehrere Zugriffsunterheiten zum Zugriff auf unterschiedliche Datenträger, insbesondere optische, magnetische, magnetooptische und/oder auf Halbleiterspeichem basierende Datenträger, aufweist.

8. Vorrichtung nach einem der vorherigen Ansprüche,
**dadurch gekennzeichnet, dass** die Zugriffseinheit-Statusanzeigen (CRS) ausgebildet sind zur Anzeige eines Datenträger- oder Zugriffsfehlers.

9. Vorrichtung nach einem der vorherigen Ansprüche,
**gekennzeichnet durch** eine Leseeinheit (TS) zum elektronischen Lesen von Daten von den Aufbewahrungsmitteln und mit Mitteln zum Zuordnen der von einem Aufbewahrungsmittel gelesenen Daten zu den von dem zugeordneten Datenträger gelesenen Daten.

10. Vorrichtung zur Erstellung von Bildprodukten anhand von auf einem elektronischen Datenträger gespeicherten Bilddaten mit
- einer Vorrichtung nach Anspruch 9 zum Lesen von digitalen Bilddaten von elektronischen Datenträgern,
- Mitteln zum Lesen von Auftragsdaten von dem selben Datenträger oder zum Eingeben von Auftragsdaten,
- einer Vorrichtung zur Verarbeitung der digitalen Bilddaten anhand der Auftragsdaten und zur Erstellung der Bildprodukte.

11. Verfahren zur Steuerung des Zugriffs auf mehrere elektronische Datenträger, denen jeweils ein Aufbewahrungsmittel zugeordnet ist mittels einer Vorrichtung mit mehreren Zugriffseinheiten (CR) für den gleichzeitigen Zugriff auf mehrere elektronische Datenträger, mehreren Ablagen (TA) für die Ablage der Aufbewahrungsmittel der elektronischen Datenträger, wobei vorzugsweise jeder Zugriffseinheit genau eine Ablage zugeordnet ist, jeweils einer Ablage-Statusanzeige (TAS) pro Ablage zur Anzeige des Ablagestatus und jeweils einer Zugriffseinheit-Statusanzeige (CRS) pro Zugriffseinheit zur Anzeige des Status der Zugriffseinheit, wobei der Zugriff auf die Datenträger und die Statusanzeigen derart gesteuert wird, dass bei Einbringen eines Datenträgers in eine Zugriffseinheit oder eines Aufbewahrungsmittels in eine Ablage mittels der Statusanzeigen eine Anzeige erfolgt, in welche Ablage bzw. Zugriffseinheit das dem eingebrachten Datenträger zugeordnete Aufbewahrungsmittel bzw. der dem eingebrachten Aufbewahrungsmittel zugeordnete Datenträger einzubringen ist, und dass nur bei Einbringung in die angezeigte Ablage bzw. Zugriffseinheit ein Zugriff auf den eingebrachten Datenträger erfolgt, wobei während des Zugriffs weitere Ablagen und Zugriffseinheiten beladen und entladen werden können.

12. Verfahren zur Steuerung des Zugriffs auf mehrere elektronische Datenträger, denen jeweils ein Aufbewahrungsmittel zugeordnet ist mittels einer Vorrichtung mit mehreren Zugriffseinheiten (CR) für den gleichzeitigen Zugriff auf mehrere elektronische Datenträger, mehreren Ablagen (TA) für die Ablage der Aufbewahrungsmittel der elektronischen Datenträger, wobei vorzugsweise jeder Zugriffseinheit genau eine Ablage zugeordnet ist, jeweils einer Ablage-Statusanzeige (TAS) pro Ablage zur Anzeige des Ablagestatus und jeweils einer Zugriffseinheit-Statusanzeige (CRS) pro Zugriffseinheit zur Anzeige des Status der Zugriffseinheit, wobei der Zugriff auf die Datenträger und die Statusanzeigen derart gesteuert wird, dass bei Entnahme eines Datenträgers aus einer Zugriffseinheit oder eines Aufbewahrungsmittels aus einer Ablage mittels der Statusanzeigen eine Anzeige erfolgt, aus welcher Ablage bzw. Zugriffseinheit das dem entnommenen Datenträger zugeordnete Aufbewahrungsmittel bzw. der dem entnommenen Aufbewahrungsmittel zugeordnete Datenträger zu entnehmen ist, und dass nur bei Entnahme aus der angezeigten Ablage bzw. Zugriffseinheit weitere Ablagen und Zugriffseinheiten beladen und entladen werden können.

13. Computerprogramm mit Computerprogramtnmitteln zur Veranlassung eines Computers zur Ausführung der Verfahrensschritte des Verfahrens nach Anspruch 11 oder 12, wenn das Computerprogramm auf einem Computer läuft.

## Claims

1. An apparatus for controlling access to a plurality of electronic data carriers, which have one storage means associated with them in each case, with:
- a plurality of access units (**CR**) for simultaneous access to a plurality of electronic data carriers,
- a plurality of holders (**TA**) for holding the storage means of the electronic data carriers, wherein precisely one holder is preferably associated with each access unit,
- one holder-status display (**TAS**) per holder in each case for the display of the holder status,
- one access-unit-status display (**CRS**) per access unit in each case for the display of the status of the access unit,
- a control unit for controlling access to the data carriers and the status displays in such a way that, when a data carrier is introduced into an access unit or when a storage means is introduced into a holder, the status displays provide an indication of the holder or access unit into which the storage means associated with the introduced data carrier or the data carrier associated with the introduced storage means is to be introduced respectively, and that only in the case of introduction into the holder or access unit indicated does access to the data carrier introduced take place, wherein further holders and access units can be loaded and unloaded during the access.

2. An apparatus for controlling access to a plurality of electronic data carriers, which have one storage means associated with them in each case, with:
- a plurality of access units (**CR**) for simultaneous access to a plurality of electronic data carriers,
- a plurality of holders (**TA**) for holding the storage means of the electronic data carriers, wherein precisely one holder is preferably associated with each access unit,
- one holder-status display (**TAS**) per holder in each case for the display of the holder status,
- one access-unit-status display (**CRS**) per access unit in each case for the display of the status of the access unit,
- a control unit for controlling access to the data carriers and the status displays in such a way that, when a data carrier is removed from an access unit or when a storage means is removed from a holder, the status displays provide an indication of the holder or access unit from which the storage means associated with the removed data carrier or the data carrier associated with the removed storage means is to be removed respectively, and that only in the case of removal from the holder or access unit indicated can further holders and access units be loaded and unloaded.

3. An apparatus according to Claim 1 or 2, **characterized in that** the access-unit-status displays (**CRS**) and/or the holder-status displays (**TAS**) have in each case an optical display means, in particular a light-emitting diode.

4. An apparatus according to Claim I or 2, **characterized in that** the access-unit-status displays (**CRS**) and/or the holder-status displays (**TAS**) have in each case a mechanical display means, in particular a closure and/or an unloading / loading apparatus.

5. An apparatus according to any one of the preceding Claims, **characterized in that** the holders (**TA**) and/or the access units (**CR**) have sensor means, in particular optical sensor means, for the detection of the loading state of the holders or the access units respectively.

6. An apparatus according to any one of the preceding Claims, **characterized in that** the holders (**TA**) are designed in order to receive photo bags, and the access units (**CR**) are designed for access to data carriers which store digital image data.

7. An apparatus according to any one of the preceding Claims, **characterized in that** the access units (**CR**) have in each case a plurality of access sub-units for access to different data carriers, in particular optical, magnetic, magneto-optical data carriers and/or data carriers based upon semiconductor memories.

8. An apparatus according to any one of the preceding Claims, **characterized in that** the access-unit-status displays (**CRS**) are designed in order to display a data-carrier or access error.

9. An apparatus according to any one of the preceding Claims, **characterized by** a reading unit (**TS**) for the electronic reading of data from the storage means and with means for the correlation of the data read from a storage means with the data read from the associated data carrier.

10. An apparatus for the production of image products with reference to image data stored on an electronic data carrier with
- an apparatus according to Claim 9 for reading digital image data from electronic data carriers,
- means for reading task data from the same data carrier or for inputting task data,
- an apparatus for the processing of the digital image data with reference to the task data and for the production of the image products.

11. A method of controlling access to a plurality of electronic data carriers, which have one storage means associated with them in each case, by means of an apparatus with a plurality of access units (**CR**) for simultaneous access to a plurality of electronic data carriers, a plurality of holders (**TA**) for holding the storage means of the electronic data carriers, wherein precisely one holder is preferably associated with each access unit, one holder-status display (**TAS**) per holder in each case for the display of the holder status, and one access-unit-status display (**CRS**) per access unit in each case for the display of the status of the access unit, wherein the access to the data carriers and the status displays is controlled in such a way that, when a data carrier is introduced into an access unit or when a storage means is introduced into a holder, the status displays provide an indication of the said holder or access unit into which the storage means associated with the introduced data carrier or the data carrier associated with the introduced storage means is to be introduced respectively, and that only in the case of introduction into the holder or access unit indicated does access to the data carrier introduced take place, wherein further holders and access units can be loaded and unloaded during the access.

12. A method of controlling access to a plurality of electronic data carriers, which have one storage means associated with them in each case, by means of an apparatus with a plurality of access units (**CR**) for simultaneous access to a plurality of electronic data carriers, a plurality of holders (**TA**) for holding the storage means of the electronic data carriers, wherein precisely one holder is preferably associated with each access unit, one holder-status display (**TAS**) per holder in each case for the display of the holder status, and one access-unit-status display (**CRS**) per access unit in each case for the display of the status of the access unit, wherein the access to the data carriers and the status displays is controlled in such a way that, when a data carrier is removed from an access unit or when a storage means is removed from a holder, the status displays provide an indication of the said holder or access unit from which the storage means associated with the removed data carrier or the data carrier associated with the removed storage means is to be removed respectively, and that only in the case of removal from the indicated holder or access unit respectively can further holders and access units be loaded and unloaded.

13. A computer program with computer-program means for causing a computer to perform the steps of the method according to Claim 11 or 12 when the computer program is running on a computer.

## Revendications

1. Dispositif de commande d'accès à plusieurs supports de données électroniques, auquel est associé un moyen de conservation respectif, comportant :
- plusieurs unités d'accès (CR) pour l'accès simultané à plusieurs supports de données électroniques,
- plusieurs compartiments de dépôt (TA) pour le dépôt des moyens de conservation des supports de données électroniques, où de préférence un compartiment de dépôt est associé précisément à chaque unité d'accès,
- un indicateur d'état de compartiment de dépôt respectif (TAS) par compartiment de dépôt pour indiquer l'état de dépôt,
- un indicateur d'état d'unité d'accès respectif (CRS) par unité d'accès pour afficher l'état de l'unité d'accès,
- une unité de commande pour commander l'accès aux supports de données et aux indicateurs d'état de sorte que, lors de l'introduction d'un support de données dans une unité d'accès ou d'un moyen de conservation dans le compartiment de dépôt, il en résulte une indication grâce aux indicateurs d'état, dans quel compartiment de dépôt ou unité d'accès le moyen de conservation associé au support de données introduit ou le support de données associé au moyen de conservation introduit doit être introduit, et que, seulement lors de l'introduction dans le compartiment de dépôt ou l'unité d'accès indiqué(e), il en résulte un accès au support de données introduit, où d'autres compartiments de dépôt et unités d'accès peuvent être chargés et déchargés pendant l'accès.

2. Dispositif de commande d'accès à plusieurs supports de données électroniques, auquel est associé un moyen de conservation respectif, comportant :
- plusieurs unités d'accès (CR) pour l'accès simultané à plusieurs supports de données électroniques,
- plusieurs compartiments de dépôt (TA) pour le dépôt du moyen de conservation de des supports de données électroniques, où de préférence un compartiment de dépôt est associé précisément à chaque unité d'accès,
- un indicateur d'état de compartiment de dépôt respectif (TAS) par compartiment de dépôt pour indiquer l'état de dépôt,
- un indicateur d'état d'unité d'accès respectif (CRS) par unité d'accès pour indiquer l'état de l'unité d'accès,
- une unité de commande pour commander l'accès aux supports de données et aux indicateurs d'état de sorte que, lors du retrait d'un support de données d'une unité d'accès ou d'un moyen de conservation d'un compartiment de dépôt, il en résulte une indication au moyen des indicateurs d'état, de quel compartiment de dépôt ou unité d'accès le moyen de conservation associé au support de données retiré ou le support de données associé au moyen de conservation retiré doit être retiré, et en ce que, uniquement lors du retrait du compartiment de dépôt ou de l'unité d'accès indiqué(e), d'autres compartiments de dépôt et unités d'accès peuvent être chargés et déchargés.

3. Dispositif selon la revendication 1 ou 2, **caractérisé en ce que** les indicateurs d'état d'unité d'accès (CRS) et/ou les indicateurs d'état de compartiment de dépôt (TAS) présentent respectivement un moyen d'affichage optique, en particulier une diode électroluminescente.

4. Dispositif selon la revendication 1 ou 2, **caractérisé en ce que** les indicateurs d'état d'unité d'accès (CRS) et/ou les indicateurs d'état de compartiment de dépôt (TAS) présentent respectivement un moyen d'affichage mécanique, en particulier un dispositif de fermeture et/ou un dispositif de retrait/chargement.

5. Dispositif selon l'une des revendications précédentes, **caractérisé en ce que** les compartiments de dépôt (TA) et/ou les unités d'accès (CR) présentent des capteurs, en particulier des capteurs optiques, pour la détection de l'état de chargement des compartiments de dépôt ou des unités d'accès.

6. Dispositif selon l'une des revendications précédentes, **caractérisé en ce que** les compartiments de dépôt (TA) sont réalisés pour la réception de pochettes de photos et **en ce que** les unités d'accès (CR) sont réalisées pour l'accès aux supports de données mémorisant des données d'images numériques.

7. Dispositif selon l'une des revendications précédentes, **caractérisé en ce que** les unités d'accès (CR) présentent respectivement plusieurs sous-unités d'accès pour l'accès aux différents supports de données, en particulier des supports de données basés sur des mémoires optiques, magnétiques, magnéto-optiques et/ou à semi-conducteurs.

8. Dispositif selon l'une des revendications précédentes, **caractérisé en ce que** les indicateurs d'état d'unité d'accès (CRS) sont réalisés pour l'affichage d'une erreur de support de données ou d'accès.

9. Dispositif selon l'une des revendications précédentes, **caractérisé par** une unité de lecture (TS) pour la lecture électronique de données depuis les moyens de conservation et comportant des moyens pour l'affectation des données lues depuis un moyen de conservation à des données lues depuis le support de données associé.

10. Dispositif pour la réalisation de produits d'image en regard des données d'images mémorisées sur un support de données électronique comportant
- un dispositif selon la revendication 9 pour lire les données d'images numériques depuis les supports de données électroniques,
- des moyens pour lire les données d'instruction depuis le même support de données ou pour saisir des données d'instruction,
- un dispositif pour traiter les données d'images numériques en regard des données d'instruction et pour réaliser les produits d'images.

11. Procédé de commande d'accès à plusieurs supports de données électroniques, auxquels un moyen de conservation respectif est associé au moyen d'un dispositif comportant plusieurs unités d'accès (CR) pour l'accès simultané à plusieurs supports de données électroniques, plusieurs compartiments de dépôt (TA) pour le dépôt des moyens de conservation des supports de données électroniques, où de préférence à chaque unité d'accès un compartiment de dépôt est associé précisément, un indicateur d'état de compartiment de dépôt respectif (TAS) par compartiment de dépôt pour afficher l'état du compartiment de dépôt et un indicateur d'état d'unité d'accès respectif (CRS) par unité d'accès pour afficher l'état de l'unité d'accès, où l'accès aux supports de données et aux indicateurs d'état est commandé de sorte que, lors de l'introduction d'un support de données dans une unité d'accès ou d'un moyen de conservation dans un compartiment de dépôt, il en résulte un affichage grâce aux indicateurs d'état, dans quel compartiment de dépôt ou unité d'accès le moyen de conservation associé aux supports de données introduits ou le support de données associé au moyen de conservation introduit doit être introduit, et que, uniquement lors de l'introduction dans le compartiment de dépôt ou l'unité d'accès affiché(e), un accès aux supports de données introduits est effectué, où d'autres compartiments de dépôt et unités d'accès peuvent être chargés et déchargés pendant l'accès.

12. Procédé de commande d'accès à plusieurs supports de données électroniques, auxquels un moyen de conservation respectif est associé au moyen d'un dispositif comportant plusieurs unités d'accès (CR) pour l'accès simultané à plusieurs supports de données électroniques, plusieurs compartiments de dépôt (TA) pour le dépôt du moyen de conservation des supports de données électroniques, où de préférence à chaque unité d'accès un compartiment de dépôt est associé précisément, un indicateur d'état de compartiment de dépôt respectif (TAS) par compartiment de dépôt pour afficher l'état du compartiment de dépôt et un indicateur d'état d'unité d'accès respectif (CRS) par unité d'accès pour l'affichage de l'état de l'unité d'accès, où l'accès aux supports de données et aux indicateurs d'état est commandé de sorte que, lors du retrait d'un support de données de l'unité d'accès ou d'un moyen de conservation depuis un compartiment de dépôt, il en résulte un affichage au moyen des indicateurs d'état, de quel compartiment de dépôt ou unité d'accès le moyen de conservation associé au support de données retiré ou le support de données associé au moyen de conservation retiré doit être retiré, et que, uniquement lors du retrait du compartiment de dépôt ou de l'unité d'accès affiché(e), d'autres compartiments de dépôt et unités d'accès peuvent être chargés et déchargés.

13. Programme informatique comportant des moyens de programme informatique pour amener un ordinateur à réaliser les étapes de procédé du procédé selon la revendication 11 ou 12, lorsque le programme informatique fonctionne dans un ordinateur.
